Europäisches Patentamt

European Patent Office

Office européen des brevets

(19)

(11) Veröffentlichungsnummer: **0 103 837**
**A2**

(12) # EUROPÄISCHE PATENTANMELDUNG

(21) Anmeldenummer: **83109007.1**

(22) Anmeldetag: **13.09.83**

(51) Int. Cl.³: **B 62 J 17/04**

(30) Priorität: **17.09.82 DE 3234599**

(43) Veröffentlichungstag der Anmeldung:
**28.03.84 Patentblatt 84/13**

(84) Benannte Vertragsstaaten:
**AT BE DE FR IT NL**

(71) Anmelder: **Januschkowetz, Gerhard, Dipl.-Phys.**
**Gluckstrasse 3**
**D-8200 Rosenheim(DE)**

(72) Erfinder: **Januschkowetz, Gerhard, Dipl.-Phys.**
**Gluckstrasse 3**
**D-8200 Rosenheim(DE)**

(54) **Abnehmbare aerodynamische Windverkleidung für Zweiradfahrzeuge, insbesondere Fahrräder.**

(57) Die Erfindung betrifft eine abnehmbare aerodynamische Windverkleidung für Zweiradfahrzeuge, insbesondere Fahrräder, die zumindest teilweise durchsichtig ist und als gekrümmter, Hohlkorper ausgebildet ist. Die Windverkleidung (30) ist bezüglich der Fahrtrichtung im wesentlichen konvex gekrümmt. Sie ist dicht an der Lenkstange (12) befestigt und deckt nur einen vorderen Teilbereich des Fahrzeugs (10) und des Fahrers (8) in Höhe der Lenkstange ab. Vorzugsweise ist sie aus durchsichtigem Kunststoff hergestellt.

Fig. 1

EP 0 103 837 A2

## Abnehmbare aerodynamische Windverkleidung für Zweiradfahrzeuge, insbesondere Fahrräder

Die Erfindung betrifft eine abnehmbare aerodynamische Windverkleidung für Zweiradfahrzeuge, insbesondere Fahrräder, die zumindest teilweise durchsichtig ist und als gekrümmter Hohlkörper ausgebildet ist.

Zweiradfahrzeuge besitzen aufgrund Ihrer zergliederten und zerklüfteten Form einen besonders großen Luftwiderstand. Dieser macht sich besonders unangenehm für die Fahrer von Fahrrädern bemerkbar. Schon bei geringem Gegenwind müssen sie ihre Anstrengungen bedeutend erhöhen, um die Fahrgeschwindigkeit beibehalten zu können.

Es ist bekannt, zur Herabsetzung des Luftwiderstandes die entsprechenden Konstruktionsflächen eines Fahrzeugs so zu gestalten oder diese Flächen und die Widerstandsflächen der auf dem Fahrzeug befindlichen Personen mit solchen Flächen zu umhüllen, daß der Widerstandsbeiwert des Fahrzeugs herabgesetzt ist. Diese Maßnahmen sind insbesondere auch darauf abgestellt, die Wirbelbildung hinter dem Fahrzeug zu vermeiden.

Es ist bekannt, Motorräder mit Windschutzverkleidungen zu versehen, die starr am Fahrzeugrahmen befestigt sind. Nachteil dieser Konstruktionen ist das große Gewicht der Verkleidungen. Außerdem ist die Bewegungsfreiheit des Fahrers eingeschränkt, und solcherart ausgestattete Fahrzeuge sind sehr seitenwindempfindlich.

In der DE-PS 22 43 636 ist ein klappbares Wetterverdeck für Zweiradfahrzeuge beschrieben, mit dem eine wesentliche Verminderung des Luftwiderstandes erreicht werden soll. In der Tat ist der Widerstandsbeiwert eines derartigen Fahrzeugs aufgrund seiner günstigeren aerodynamischen Form etwas geringer. Dies wird jedoch durch die vergrößerte angeströmte Fläche wieder ausgeglichen, so daß sich insgesamt keine wesentliche Verminderung des Luftwiderstandes ergibt. Außerdem bietet die große Seitenfläche des Wetterverdecks dem Wind eine große Angriffsfläche, so daß ein kräftiger Windstoß das Fahrzeug umwerfen kann. Infolge der käfigartigen Bauweise des Wetterverdecks ist überdies die Bewegungsfreiheit des Fahrers stark eingeschränkt.

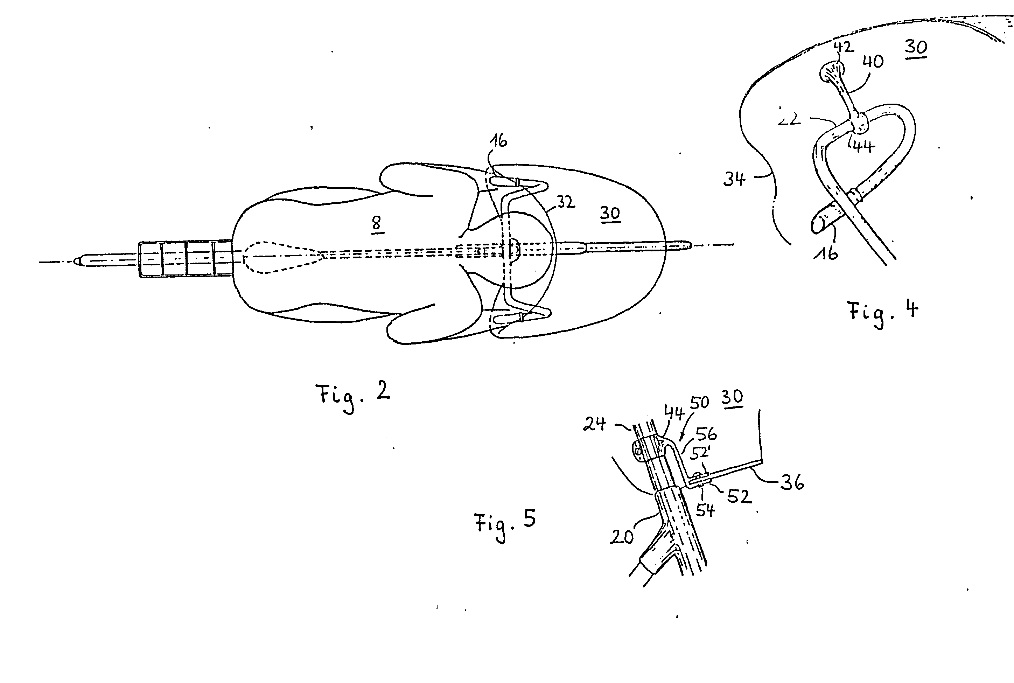

In der DE-PS 276 702 ist eine mit dem Oberbegriff des Anspruchs 1 gattungsgemäße Windverkleidung beschrieben, die zumindest zweiteilig ausgebildet ist. Ein vorderer Teil dient zur Herabsetzung des Anströmwiderstandes und schafft eine windstille Zone für den Fahrer. Die gewichtsmäßig günstigere Ausführungsform nach Fig. 4 ist seitlich offen, und der Vorderteil schließt die Lenkstange des Zweiradfahrzeugs nicht vollständig ein, vielmehr tritt diese Stange durch eine hierfür vorgesehene Öffnung hindurch und ragt nach außen vor. Die Öffnung ist derart eingerichtet, daß die Lenkstange frei ausschwingen kann. Die bekannte Windverkleidung ist so konzipiert, daß sie durch den Fahrer selbst zu beliebiger Zeit angebracht und abgenommen werden kann.

Der Erfindung liegt die Aufgabe zugrunde, den Luftwiderstand eines Zweiradfahrzeuges unter Vermeidung der oben beschriebenen Nachteile wesentlich zu senken.

Diese Aufgabe ist durch die Weiterbildung einer gattungsgleichen Windverkleidung gemäß dem Kennzeichen des An-

0103837

spruchs 1 gelöst.

Die erfindungsgemäße Windverkleidung deckt nur einen vorderen, für den Widerstandsbeiwert entscheidenden Teilbereich des Fahrzeugs, insbesondere die Lenkstange und deren benachbarte Teile sowie entsprechende Teile des Fahrers, ab. Dementsprechend ist ihr Gewicht gering, was sich vorteilhaft für den Kraftaufwand des Fahrers bemerkbar macht, und die Seitenwindanfälligkeit des Fahrzeugs ist nicht erhöht.

Der Widerstandsbeiwert der Windverkleidung selbst ist gering, aber erst in Verbindung mit dem Fahrer ergibt sich eine für die Umströmung sehr vorteilhafte Stromlinienform mit einem etwa um die Hälfte reduzierten Widerstandsbeiwert. Eine vorgeneigte Haltung des Fahrers, wie sie insbesondere bei Sportlenkrädern der Fall ist, führt zur weiteren Senkung des Luftwiderstandes, der auf ein Minimum herabgesetzt ist, wenn der Kopf des Fahrers dicht vor die Windverkleidung gehalten ist, so daß Windverkleidung und Fahrer sich zu einem einheitlichen Widerstandskörper ergänzen. Die günstigste Form ergibt sich, wenn die Schultern und der Hinterkopf des Fahrers sowie die Oberkante der Windverkleidung etwa auf einer Ebene liegen.

Damit nun der Fahrer auch in einer mehr oder weniger vorgeneigten Form in seiner Sicht nicht eingeschränkt ist, ist die erfindungsgemäße Windverkleidung zumindest teilweise durchsichtig. Vorzugsweise besteht der Sichtbereich aus glasklarem und optisch verzerrungsfreiem Kunststoff.

Zweckmäßig ist die erfindungsgemäße Windverkleidung nach Anspruch 4 einteilig ausgebildet und besteht vorzugsweise nach Anspruch 5 aus durchsichtigem Kunststoff, der formstabil und witterungsbeständig ist. Eine solche Windverkleidung besitzt nur ein geringes Gewicht und kann billig in großen Mengen hergestellt werden.

Die erfindungsgemäße Windverkleidung ist einfach anzubringen, und sie kann zur Aufbewahrung bzw. Aufstellung des Zweiradfahrzeuges von diesem abgenommen und an einem anderen Ort gelagert werden. Auch ist die Beweglichkeit der Lenkstange durch die Verkleidung völlig uneingeschränkt.

Die erfindungsgemäße Windverkleidung kann mit einfachen Mitteln am Fahrzeug gehaltert werden. Zu diesem Zweck wird sie nach Anspruch 8 bevorzugt an der Lenkstange befestigt. Dies ermöglicht die Verwendung von kurzen Halteteilen. Zweckmäßig ist sie zusätzlich nach Anspruch 9 an der Vorderradgabel befestigt, so daß sie völlig stabilisiert ist. Die Halterungsteile können auf einfache Weise mittels Klemmschellen am Fahrradgestänge befestigt sein. Vorzugsweise weisen die Halterungsteile nach Anspruch 11 U-Schenkel auf, zwischen denen die Windverkleidung eingesetzt ist.

Durch die erfindungsgemäße Windverkleidung ist der Fahrer weitaus weniger aufgewirbelten Staubwolken und Abgasschwaden überholender oder vorausfahrender Kraftfahrzeuge - ebenso wie die dem Fahrt- bzw. Gegenwind - ausgesetzt. Bei stark vorgeneigter Haltung des Fahrers ist zweckmäßig nach den Ansprüchen 14 bis 17 ein Spiegel oder Spiegelsystem im unteren Teil der Windverkleidung angebracht. Mittels solcher Spiegel kann der Fahrer mit entspannter Kopfhaltung des Verkehrsgeschehen beobachten. Er kann eine stark entspannte Sitzposition einnehmen und muß den Kopf nicht mehr krampfhaft in den Nacken strecken, sondern kann die natürliche

Kopfhaltung wie beim aufrechten Gehen beibehalten. Die Brust- und Halsmuskulator ist entspannt, wodurch die Atmung verbessert und die Leistungsfähigkeit gesteigert sind. Günstig ist eine Anordnung eines Spiegels im Winkel von etwa 45° zur Fahrbahnfläche. Es kann aber auch ein Spiegelsystem zur seitenrichtigen oder Panoramawiedergabe gewählt werden, die das Gesichtsfeld des Fahrers vergrößert. Selbstverständlich kann die Anbringung des Spiegels oder Spiegelsystems auch am Rahmen des Fahrzeugs erfolgen.

Weitere Vorteile und Merkmale der Erfindung gehen aus den Unteransprüchen in Verbindung mit der Beschreibung und der Zeichnung hervor. In letzterer zeigen:

Fig. 1    eine Seitenansicht eines mit der erfindungsgemäßen Windverkleidung versehenen Fahrrads und des Fahrers;

Fig. 2    eine Draufsicht auf die in Fig. 1 gezeigte Windverkleidung mit Fahrrad und Fahrer;

Fig. 3    eine Teilvorderansicht der erfindungsgemäßen Windverkleidung und der Fahrradlenkstange;

Fig. 4    eine Veranschaulichung der Halterung der erfindungsgemäßen Windverkleidung an einer Fahrradlenkstange, und

Fig. 5    ein Beispiel für die Befestigung der erfindungsgemäßen Windverkleidung an der Vorderradgabel.

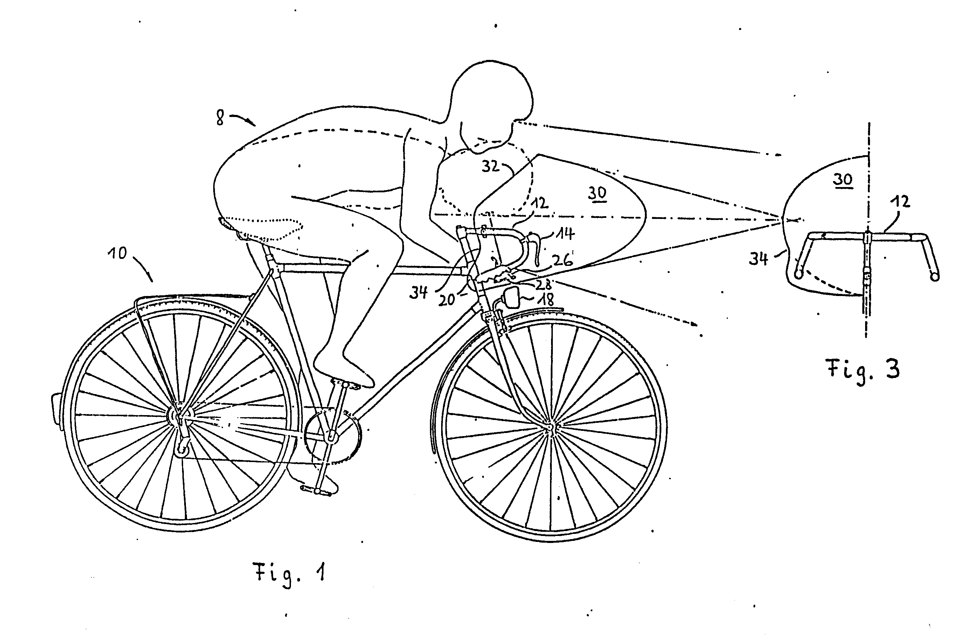

In Fig. 1 ist eine Seitenansicht einer an einem Fahrrad 10 montierten, erfindungsgemäßen Windverkleidung 30 dargestellt, die an der Lenkstange 12 des Fahrrads befestigt ist. Ebenfalls abgebildet ist der Fahrer 8, einmal in einer Haltung mit aufgerichtetem Kopf (durchgezogene Darstellung) und in stark vorgeneigter Haltung mit gesenktem Kopf (gestrichelte Darstellung).

Die Windverkleidung 30 ist als ellipsoidförmiger Hohlkörper ausgebildet. Im gezeigten Beispiel besteht sie aus Polymethylmethacrylat, gewöhnlich als Plexiglas bezeichnet, oder aus Polycarbonat. Die Form der Windverkleidung ist so gewählt, daß der Fahrer sich völlig nach vorne beugen kann, bis wesentliche Teile des Kopfes vom Wind völlig abgeschirmt sind (gestrichelte Darstellung). Zu diesem Zweck ist der Ellipsoidkörper in der oberen Hälfte nach vorne ausgeschnitten, so daß sein oberer Randbereich 32 von der Seite her gesehen um einen Winkel von etwa 45° nach vorne und oben verläuft. Der Kopf des Fahrers stößt so auch in der vordersten Position nicht an die Verkleidung.

Die Windverkleidung ist nach vorne längsgestreckt, fast bis zum Ende des Vorderrads, um einen günstigen Widerstandsbeiwert zu erzielen. Die Verlängerung der Tangente an die obere Umfangsbegrenzung des Hohlkörpers im oberen Randbereich ist gleichzeitig in etwa die Tangente an den Kopf des stark vorgeneigten Fahrers, wie aus Fig. 1 ersichtlich ist. Auf diese Weise ergibt sich eine aerodynamisch optimale Konfiguration, und der Widerstandsbeiwert des Systems Fahrer - Fahrrad - Windverkleidung ist minimal. Auch für die weniger stark vorgeneigte Position ergeben sich noch günstige Widerstandsbeiwerte, wie unleicht aus der gezeigten Darstellung ersichtlich ist.

Die Windverkleidung ist bis unter die Lenkstange und seitlich um diese herum gezogen, so daß die Lenkstange völlig von ihr abgedeckt ist. Den Windwiderstand erhöhende Zubehörteile, wie ein Handbremshebel 14, Klingel, Rückspiegel etc., sind somit ebenfalls von der Windverkleidung abgeschirmt und wirken sich nicht nachteilig auf den Luftwiderstand des Fahrzeugs aus. Die Windverkleidung ist im unteren seitlichen Bereich etwas ausgeschnitten, so daß sich eine Einwölbung 34 ergibt. Diese ermöglicht es, daß der Fahrer seinen Unterarm bequem seitlich nach außen schwenken und Handbremshebel, Klingel etc. bequem bedienen kann. Die Einwölbung 34 ist in Fig. 3 ebenfalls gezeigt. Fig. 1 bis 3 zeigen auch deutlich, wie die Windverkleidung um die Lenkstange herum unter dieser über den Handgriff 16 des Fahrrads 10 hinweg nach hinten verläuft. Im gezeigten Beispiel ist der Scheinwerfer 18 des Fahrrads unterhalb der Windverkleidung angebracht. Er kann jedoch auch weiter oben montiert sein, so daß er ebenfalls in den Windschatten der Windverkleidung fällt. Alternativ kann er auch in der Verkleidung angeschraubt, angesteckt oder angeklebt sein, da bei einer Richtungsänderung des Fahrrades die Windverkleidung um einen gleichen Winkel wie das Vorderrad gedreht wird.

An der Unterseite ist die Windverkleidung um das Steuerrohr 20 herum ausgeschnitten, so daß die Windverkleidung auch bei maximaler Drehung der Lenkstange 12 die Vorderradbremse in ihrer Wirkung nicht beeinträchtigt.

In Fig. 4 ist ein Beispiel für die Halterung der Windverkleidung an der Lenkstange des Fahrrads gezeigt. Es ist ein Teil einer Sport-Lenkstange 12 mit einem Handgriff 16 dargestellt. Am seitlichen oberen Bereich der Windverkleidung ist innen eine Halterung 40 angebracht, mittels der die Windverkleidung an der Lenkstange montiert ist. Die Halterung 40 ist im wesentlichen stangenförmig ausgebildet und erweitert sich an dem der Windverkleidung zugewandten Ende in Form einer kreisförmigen Platte 42, die an der Windverkleidung angeklebt, angeschweißt oder mit dieser verschraubt ist. Am anderen Ende ist
die Halterung mit einer Klemmschelle 44 versehen, die die
Lenkstange umschließt. Zum Abnehmen der Windverkleidung
braucht lediglich die Klemmschelle geöffnet zu werden.

In Fig. 5 ist ein Beispiel für die Halterung der Windverkleidung am Gabelrohr 24 eines Fahrrads gezeigt. Eine im wesentlichen stangenförmige Halterung 50 endet in zwei U-Schenkeln
52,52', zwischen denen der untere Randbereich 36 der Windverkleidung eingesetzt ist. Zur kippsicheren Halterung der Windverkleidung besitzen die U-Schenkel eine vorbestimmte seitliche Ausdehnung. Im gezeigten Beispiel ist die Windverkleidung zwischen den U-Schenkeln mittels einer Schraube 54 eingeschraubt. Der stangenförmige Bereich 56 der Halterung 50
ist im gezeigten Beispiel im wesentlichen gerade ausgebildet,
und die U-Schenkel erstrecken sich von diesem Bereich im
rechten Winkel. Der stangenförmige Bereich kann jedoch auch
eine beliebig gebogene Form besitzen. Am anderen Ende mündet
der stangenförmige Bereich 56 in eine Klemmschelle 44, die
das Gabelrohr 24 des Fahrrades umschließt. Zum Abnehmen der
Verkleidung braucht lediglich die Klemmschelle geöffnet zu
werden. Diese untere Halterung der Windverkleidung dient
im wesentlichen dazu, ein Abkippen der Verkleidung zu vermeiden und diese gesichert zu halten.

Der in Fig. 1 dargestellte Spiegel 26 ist mittels Blech- oder
Kunststoffwinkeln 28 fest mit dem Unterteil der Verkleidung
verbunden. Die Spiegelebene und die Fahrbahnfläche bilden
einen Winkel von etwa 45°. In der stark vorgeneigten Position
sieht der Fahrer mit Hilfe des Spiegels den Straßenverlauf
vor sich. Da das für die Windverkleidung verwendete Material optisch verzerrungsfrei ist, kann der Fahrer ohne Beeinträchtigung seines Gesichtsfeldes den Verkehr und die Straße beobachten. Insbesondere wird durch diesen Spiegel auch die Gefahr der so häufig vorkommenden Auffahrunfälle stark vorgeneigter Fahrradfahrer vermieden. Der Spiegel kann auch in einer Halterung mit Längsschlitz angeordnet sein, so daß er in Längsrichtung je nach Oberkörperlänge des Fahrers angepaßt werden kann. Außerdem kann der Spiegel verstellbar ausgestattet werden, wodurch der jeweiligen Neigung des Fahrers Rechnung getragen werden kann.

0103837

Patentansprüche

1. Abnehmbare aerodynamische Windverkleidung für Zweiradfahrzeuge, insbesondere Fahrräder, die zumindest teilweise durchsichtig ist und als gekrümmter Hohlkörper ausgebildet ist, dadurch g e k e n n z e i c h n e t , daß die Winverkleidung (30) bezüglich der Fahrtrichtung im wesentlichen konvex gekrümmt ist, daß die Windverkleidung dicht an der Lenkstange (12) befestigt ist und daß sie nur einen vorderen Teilbereich des Fahrzeugs und des Fahrers in Höhe der Lenkstange abdeckt.

2. Windverkleidung nach Anspruch 1 , dadurch gekennzeichnet, daß sie im wesentlichen die Form eines Ellipsoidenabschnittes oder eines Paraboloides aufweist.

3. Windverkleidung nach Anspruch 1 und 2, dadurch gekennzeichnet, daß sie einteilig ist.

4. Windverkleidung nach einem der Ansprüche 1 bis 3, dadurch gekennzeichnet, daß sie aus einem durchsichtigen Kunststoff hergestellt ist.

5. Windverkleidung nach einem der Ansprüche 1 bis 4 , dadurch gekennzeichnet, daßsie aus einem unteren Trägerteil und einem an diesem befestigten durchsichtigen Oberteil besteht.

6. Windverkleidung nach einem der Ansprüche 1 bis 5, dadurch gekennzeichnet, daß sie an der Lenkstange (12) und/oder an der Vorderradgabel befestigt ist.

7. Windverkleidung nach einem der Ansprüche 1 bis 6, dadurch gekennzeichnet, daß in ihrem unteren Bereich ein Spiegel (26) angeordnet ist.

8. Windverkleidung nach Anspruch 7, dadurch gekennzeichnet, daß der Abstand des oder der Spiegel (26) von der Vorderradgabel einstellbar ist.

9. Windverkleidung nach einem der Ansprüche 1 bis 8, dadurch gekennzeichnet, daß der Scheinwerfer (18) des Fahrzeugs (10) in die Windverkleidung integriert ist.

8

32

30

12

30

12

10

14

26

34 20 28

18

34

Fig. 1

Fig. 3

1/3

0103837

Fig. 2

16

8    32    30

Fig. 4

42    40    30
22
44
34
16

Fig. 5

24    44  50  30
56
52'
20    54    52    36

0103837